# EUROPÄISCHE PATENTSCHRIFT

(11) **EP 3 221 619 B1**
(45) Veröffentlichungstag und Bekanntmachung des Hinweises auf die Patenterteilung: **05.08.2020**
(21) Anmeldenummer: 15793767.3
(22) Anmeldetag: 06.11.2015
(51) Int. Cl.: F16H 63/34

(54) **VERFAHREN ZUM BETREIBEN EINER AUTOMATIKGETRIEBEEINRICHTUNG SOWIE ENTSPRECHENDE AUTOMATIKGETRIEBEEINRICHTUNG**
METHOD FOR OPERATING AN AUTOMATIC TRANSMISSION APPARATUS AND CORRESPONDING AUTOMATIC TRANSMISSION APPARATUS
PROCÉDÉ POUR FAIRE FONCTIONNER UN DISPOSITIF DE BOÎTE DE VITESSES AUTOMATIQUE AINSI QUE DISPOSITIF DE BOÎTE DE VITESSES AUTOMATIQUE CORRESPONDANT

(30) Priorität: 20.11.2014 DE 102014017172
(43) Veröffentlichungstag der Anmeldung: 27.09.2017
(73) Patentinhaber: Audi AG, 85045 Ingolstadt (DE)
(72) Erfinder: AMMLER, Stefan, 86673 Bergheim (DE)
(74) Vertreter: Lehle, Josef
(86) Internationale Anmeldenummer: PCT/EP2015/075934
(87) Internationale Veröffentlichungsnummer: WO 2016/078939

(56) Entgegenhaltungen:
- DE-A1-102009 018 975
- DE-C1- 10 157 459
- US-A1- 2011 198 190

## Beschreibung

Die Erfindung betrifft ein Verfahren zum Betreiben einer Automatikgetriebeeinrichtung mit einer Parksperrvorrichtung, wobei die Parksperrvorrichtung eine Hydraulikeinrichtung mit einem Hydraulikzylinder und einem darin angeordneten, mittels einer Sperreinrichtung in zumindest zwei Positionen festsetzbaren Hydraulikkolben sowie eine Notentriegelungseinrichtung aufweist, wobei der Hydraulikkolben mit einer Schaltwelle der Parksperrvorrichtung wirkverbunden und ein Druck in dem Hydraulikzylindern mittels eines Hydraulikventils einstellbar ist, und wobei die Schaltwelle mittels des Hydraulikzylinders innerhalb eines Betriebspositionsbereichs verlagerbar ist. Die Erfindung betrifft weiterhin eine Automatikgetriebeeinrichtung.

Die Automatikgetriebeeinrichtung ist beispielsweise einem Kraftfahrzeug zugeordnet und liegt insoweit vorzugsweise zwischen einer Antriebseinrichtung des Kraftfahrzeugs sowie wenigstens einer angetriebenen Achse vor. Die Automatikgetriebeeinrichtung dient dazu, in einem Fahrbetrieb des Kraftfahrzeugs unterschiedliche Übersetzungen einzustellen, welche nachfolgend zwischen der Antriebseinrichtung und der zumindest einen angetriebenen Achse vorliegen. Die Automatikgetriebeeinrichtung stellt dabei mehrere Fahrgänge bereit, welche vorzugsweise voneinander unterschiedliche Übersetzungen aufweisen. Beispielsweise sind mehrere dieser Fahrgänge als Vorwärtsgänge und zumindest ein Fahrgang als Rückwärtsgang ausgebildet.

Die Automatikgetriebeeinrichtung stellt die Übersetzung vorzugsweise in Abhängigkeit von einem Betriebszustand ein, beispielsweise in Abhängigkeit von einem Drehmoment und/oder einer Drehzahl, insbesondere der Antriebseinrichtung. Die Antriebseinrichtung kann dabei vorzugsweise als Brennkraftmaschine oder aber als Hybridantriebseinrichtung, insbesondere aufweisend eine Brennkraftmaschine sowie eine elektrische Maschine, ausgestaltet sein.

Die Automatikgetriebeeinrichtung wird vorzugsweise über eine sogenannte "Shift by Wire"-Ansteuerung angesprochen. Das bedeutet, dass eine ausschließlich elektronische und/oder optische Kommunikation zwischen einem Wählhebel und der Automatikgetriebeeinrichtung vorliegt, insbesondere keine mechanische und/oder hydraulische Kommunikation. An dem Wählhebel kann ein Fahrer des Kraftfahrzeugs die gewünschte Fahrstufe durch Verlagern des Wählhebels in eine bestimmte Stellung einstellen. Beispielsweise kann der Wählhebel in einer Parkstellung "P", einer Rückwärtsfahrstellung "R", einer Neutralstellung "N" sowie einer Vorwärtsfahrstellung "D" angeordnet sein. Die Stellung des Wählhebels wird wie bereits erläutert elektronisch und/oder optisch, insbesondere ausschließlich auf diese Art, an die Automatikgetriebeeinrichtung übermittelt.

Um das Kraftfahrzeug in der Parkstellung des Wählhebels sicher festzusetzen, also ein Wegrollen des Kraftfahrzeugs zu verhindern, verfügt die Automatikgetriebeeinrichtung über die Parksperrvorrichtung. Diese weist die Hydraulikeinrichtung auf, welche über den Hydraulikzylinder und den Hydraulikkolben verfügt. Der Hydraulikkolben ist verlagerbar in dem Hydraulikzylinder angeordnet. Dem Hydraulikzylinder beziehungsweise dem Hydraulikkolben ist die Sperreinrichtung zugeordnet, mittels welcher der Hydraulikkolben jeweils in einer von zumindest zwei Positionen innerhalb des Hydraulikzylinders festsetzbar ist.

Unter Verwendung des Hydraulikventils kann der in dem Hydraulikzylinder vorliegende Druck eingestellt werden. Die Position des Hydraulikkolbens innerhalb des Hydraulikzylinders hängt dabei - sofern er nicht mittels der Sperreinrichtung festgesetzt ist - von diesem Druck ab. Über das Hydraulikventil kann insoweit die Position des Hydraulikkolbens innerhalb des Hydraulikzylinders eingestellt werden, insbesondere steuernd und/oder regelnd eingestellt werden. Vorzugsweise ist die Schaltwelle mittels der Hydraulikeinrichtung ausschließlich innerhalb des Betriebspositionsbereichs verlagerbar.

Mithilfe des Hydraulikventils kann insoweit der Hydraulikkolben lediglich in Positionen verlagert werden, welchen Positionen der Schaltwelle in dem Betriebspositionsbereich entsprechen. Mit dem Hydraulikkolben ist die Schaltwelle wirkverbunden, welche der Parksperrvorrichtung zugeordnet ist. Über die Schaltwelle wird die Parksperrvorrichtung entweder aktiviert oder deaktiviert, in Abhängigkeit von ihrer Stellung beziehungsweise der Stellung des Hydraulikkolbens in dem Hydraulikzylinder. Innerhalb des Betriebspositionsbereichs liegt insoweit eine erste Position vor, in welcher die Schaltwelle derart angeordnet ist, dass die Parksperrvorrichtung deaktiviert ist, während ebenfalls innerhalb des Betriebspositionsbereichs eine zweite Position vorliegt, in welcher die Parksperrvorrichtung aktiviert ist.

Bei aktivierter Parksperrvorrichtung ist die Automatikgetriebeeinrichtung blockiert, sodass eine Drehmomentübertragung von einer Eingangswelle der Automatikgetriebeeinrichtung zu einer Ausgangswelle und/oder umgekehrt unterbunden ist. Vorzugsweise ist bei aktivierter Parksperrvorrichtung zumindest die Ausgangswelle blockiert. Die Eingangswelle ist vorzugsweise mit der Antriebseinrichtung wirkverbunden oder wirkverbindbar, während die Ausgangswelle mit der wenigstens einen angetriebenen Achse des Kraftfahrzeugs wirkverbunden oder wirkverbindbar ist.

Beispielsweise dient die Sperreinrichtung nun dazu, den Hydraulikkolben beziehungsweise die Schaltwelle entweder in der ersten Position oder der zweiten Position festzusetzen. Bei aktivierter Sperreinrichtung werden insoweit der Hydraulikkolben und die Schaltwelle derart festgesetzt, dass sie nicht aus der momentan vorliegenden Position, insbesondere nicht aus der ersten Position und/oder der zweiten Position, herausgelangen können. Mithilfe der Sperreinrichtung wird also der momentane Betriebszustand der Parksperrvorrichtung zuverlässig gehalten, sodass es nicht zu einer unbeabsichtigten Rollbewegung des Kraftfahrzeugs und/oder einem unbeabsichtigten Blockieren der Automatikgetriebeeinrichtung während einer Fahrt des Kraftfahrzeugs kommen kann.

Sollte es zu einer Fehlfunktion der Automatikgetriebeeinrichtung, insbesondere der Parksperrvorrichtung, kommen, so kann der Fall eintreten, dass das Kraftfahrzeug zwar grundsätzlich fahrbereit ist, die Parksperrvorrichtung einen Fahrbetrieb des Kraftfahrzeugs jedoch nicht zulässt. Aus diesem Grund wird dem Fahrer des Kraftfahrzeugs die Möglichkeit gegeben, die Parksperrvorrichtung mittels der Notentriegelungseinrichtung zu deaktivieren. Die Notentriegelungseinrichtung ermöglicht beispielsweise ein manuelles Verlagern der Schaltwelle. Allerdings kann bei bekannten Automatikgetriebeeinrichtungen nicht erkannt werden, ob die Parksperrvorrichtung mittels der Notentriegelungseinrichtung deaktiviert wurde.

Aus dem Stand der Technik ist beispielsweise die Druckschrift US 2011/0198190 A1 bekannt. Diese beschreibt ein Parksperren-System für ein Getriebe, mit einer Parksperre zum Blockieren oder Freigeben des Getriebes, mit einer elektrischen Wirkverbindung zwischen einer Bedieneinrichtung des Kraftfahrzeugs und der Parksperre, mit einem Federspeicher zum Einlegen der Parksperre, mit einer druckgesteuerten Löseeinrichtung zum Auslegen der Parksperre, mit einer Halteeinrichtung zur Verriegelung der Parksperre in ausgelegtem und/oder eingelegtem Zustand, sowie mit einer Notentriegelungs-Einrichtung der Parksperre. Dabei soll die Notentriegelungs-Einrichtung bei stehendem Antriebsaggregat ausgelöst durch ein definiertes Ereignis einer Einrichtung betätigen, um die Parksperre druckgesteuert auszulegen, wobei dieselbe über die Halteeinrichtung in ausgelegtem Zustand verriegelbar ist und vorzugsweise solange in ausgelegtem Zustand verriegelt bleibt, wie die Notentriegelungs-Einrichtung aktiviert ist, wobei das definierte Ereignis, welches die Betätigung der Einrichtung zum druckgesteuerten Auslegen der Parksperre auslöst, dann vorliegt, wenn mindestens zwei Bedieneinrichtungen definiert betätigt werden beziehungsweise betätigt worden sind.

Weiterhin ist aus der Druckschrift DE 10 2009 018 975 A1 ein Fahrzeug mit einem Automatikgetriebe mit Parksperreinrichtung sowie aus der Druckschrift DE 101 57 459 C1 eine Betätigungseinrichtung für ein Automatikgetriebe eines Kraftfahrzeugs bekannt.

Es ist daher Aufgabe der Erfindung, ein Verfahren zum Betreiben einer Automatikgetriebeeinrichtung vorzuschlagen, welches gegenüber dem bekannten Stand der Technik Vorteile aufweist, insbesondere die Erkennung einer Nutzung der Notentriegelungseinrichtung zum Deaktivieren der Parksperrvorrichtung ermöglicht.

Dies wird erfindungsgemäß mit einem Verfahren mit den Merkmalen des Anspruchs 1 erreicht. Dabei ist vorgesehen, dass bei einer Betätigung der Notentriegelungseinrichtung die Schaltwelle in eine Position verlagert wird, die außerhalb des Betriebspositionsbereichs liegt und dass ein Betriebszustand der Notentriegelungseinrichtung geprüft wird, wobei auf eine betätigte Notentriegelungseinrichtung erkannt wird, wenn über eine bestimmte Zeitspanne hinweg mittels eines Positionssensors eine Position der Schaltwelle ermittelt wird, die außerhalb des Betriebspositionsbereichs liegt, und/oder wenn eine mittels des Positionssensors erfasste, von der Schaltwelle zurückgelegte Strecke einen Grenzwert überschreitet. In der Position, in welche die Schaltwelle mittels der Notentriegelungseinrichtung gebracht wird, ist die Parksperrvorrichtung vorzugsweise deaktiviert, die Automatikgetriebeeinrichtung also nicht (mehr) blockiert.

Die Notentriegelungseinrichtung ist also derart ausgestaltet, dass bei ihrer Betätigung die Schaltwelle derart verlagert wird, dass sie nachfolgend außerhalb des Betriebspositionsbereichs liegt. Besonders bevorzugt ist die Schaltwelle mittels der Notentriegelungseinrichtung unabhängig von dem Hydraulikkolben verlagerbar. Die Betätigung der Notentriegelungseinrichtung führt dazu, dass die Schaltwelle nicht in einer Position vorliegt, welche mittels der Hydraulikeinrichtung einstellbar ist.

Insoweit stellt es eine äußerst einfache und elegante Lösung dar, die Position der Schaltwelle mittels des Positionssensors zu ermitteln und auf die betätigte Notentriegelungseinrichtung zu erkennen, wenn die momentane Position der Schaltwelle außerhalb des Betriebspositionsbereichs liegt. So kann auf einfache Art und Weise der Betriebszustand der Notentriegelungseinrichtung geprüft und festgestellt werden. Der Betriebszustand der Notentriegelungseinrichtung gibt dabei an, ob die Notentriegelungseinrichtung zum Deaktivieren der Parksperrvorrichtung betätigt wurde oder ob sie unbetätigt ist.

Zusätzlich oder alternativ kann mittels des Positionssensors die von der Schaltwelle zurückgelegte Strecke erfasst werden, wobei insbesondere nur die in eine Richtung zurückgelegte Strecke berücksichtigt wird. Überschreitet die erfasste Strecke den Grenzwert, so kann ebenfalls darauf geschlossen werden, dass die Position der Schaltwelle außerhalb des Betriebspositionsbereichs liegt und mithin die Notentriegelungseinrichtung zum Deaktivieren der Parksperrvorrichtung deaktiviert wurde. Der Grenzwert kann dabei derart gewählt werden, dass bei seinem Überschreiten die Position zuverlässig außerhalb des Betriebspositionsbereichs liegt. Beispielsweise entspricht der Grenzwert der Größe des Betriebspositionsbereichs, also der Differenz zwischen den den Betriebspositionsbereichs begrenzenden Grenzen.

Weiterhin kann es vorgesehen sein, mittels des Positionssensors eine Strecke zu erfassen, um welche die Schaltwelle verlagert wird, insbesondere über die Zeitspanne hinweg. Überschreitet die erfasste Strecke einen bestimmten Grenzwert, weicht insbesondere die mittels des Positionssensors erfasste Position der Schaltwelle mindestens um den Grenzwert von derjenigen Position ab, in welcher die Parksperrvorrichtung aktiviert ist, so wird auf die betätigte Notentriegelungseinrichtung erkannt, insbesondere wenn die vorstehend genannte Bedingung ebenfalls zutrifft.

Zusätzlich kann im Rahmen einer weiteren Variante überprüft werden, ob die Sperreinrichtung den Hydraulikkolben in einer der Positionen über die bestimmten Zeitspanne hinweg festgesetzt hat. In diesem Fall wird vorzugsweise nur dann auf die betätigte Notentriegelungseinrichtung erkannt, wenn diese Bedingung erfüllt ist. Insgesamt wird also festgestellt, ob die Schaltwelle verlagert wurde, sich also ihre Position verändert hat, insbesondere aus dem Betriebspositionsbereich heraus, obwohl der Hydraulikkolben mittels der Sperreinrichtung festgesetzt ist.

Eine andere Variante, welche zusätzlich oder alternativ zu der vorstehend erläuterten Variante herangezogen werden kann, stellt eine Überprüfung des Iststroms des Hydraulikventils dar. In diesem Rahmen wird die Abweichung zwischen dem Sollstrom des Hydraulikventils und dem Iststrom ermittelt, insbesondere während der bestimmten Zeitspanne. Beispielsweise wird die maximale Abweichung zwischen dem Sollstrom und dem Iststrom während der gesamten Zeitspanne ermittelt. Übersteigt die Abweichung beziehungsweise die maximale Abweichung den Grenzwert nicht, ist also kleiner als dieser, so kann ebenfalls darauf geschlossen werden, dass die Schaltwelle nicht mittels der Hydraulikeinrichtung, sondern vielmehr mithilfe der Notentriegelungseinrichtung verlagert wurde.

Besonders bevorzugt wird auf die betätigte Notentriegelungseinrichtung erkannt, wenn zumindest eine, vorzugsweise mehrere, insbesondere alle, der genannten Bedingungen zutreffen. Insoweit wird eine fälschliche Erkennung auf die betätigte Notentriegelungseinrichtung vermieden.

In einer weiteren Ausgestaltung der Erfindung ist vorgesehen, dass das Prüfen des Betriebszustands eingeleitet wird, wenn an der Automatikgetriebeeinrichtung eine Parkstellung eingestellt ist, und/oder mittels des Positionssensors eine Position der Schaltwelle ermittelt wird, die innerhalb des Betriebspositionsbereichs liegt, und/oder die Sperreinrichtung zum Festsetzen des Hydraulikkolbens aktiviert ist, und/oder der Sollstrom des Hydraulikventils dem Iststrom entspricht. Auch hier kann es ausreichend sein, dass eine der genannten Bedingungen zutrifft, um das Prüfen des Betriebszustands einzuleiten. Besonders bevorzugt müssen jedoch mehrere, insbesondere alle, der genannten Bedingungen erfüllt sein. Insbesondere muss diejenige Bedingung beziehungsweise müssen diejenigen Bedingungen erfüllt sein, welche während des Prüfens dieselben Größen abfragen.

Eine besonders bevorzugte Ausgestaltung der Erfindung sieht vor, dass das Prüfen des Betriebszustands eingeleitet wird, wenn an der Automatikgetriebeeinrichtung eine von der Parkstellung verschiedene Fahrstellung eingestellt ist. Auch bei mutmaßlich deaktivierter Parksperrvorrichtung kann insoweit das vorstehend beschriebene Verfahren herangezogen werden, um den Betriebszustand der Notentriegelungseinrichtung zu prüfen, nämlich wenn die genannte Bedingung zutrifft.

In einer Weiterbildung der Erfindung ist vorgesehen, dass ein Betriebszustand der Hydraulikeinrichtung, die den Hydraulikzylinder und/oder das Hydraulikventil aufweist, überwacht wird. Die Hydraulikeinrichtung umfasst zumindest den Hydraulikzylinder. Zusätzlich kann sie das Hydraulikventil aufweisen. Es ist nun vorgesehen, dass die Hydraulikeinrichtung auf eine ordnungsgemäße Funktion überwacht wird. Der Betriebszustand spiegelt insoweit wieder, ob ein ordnungsgemäßer Betrieb der Hydraulikeinrichtung sichergestellt ist oder ob ein Fehler der Hydraulikeinrichtung vorliegt.

Eine weitere bevorzugte Ausgestaltung der Erfindung sieht vor, dass ein Betriebszustand der Sperreinrichtung überwacht wird. Zusätzlich oder alternativ zu der Überwachung des Betriebszustands der Hydraulikeinrichtung kann insoweit auch der Betriebszustand der Sperreinrichtung überwacht werden. Die Sperreinrichtung wird vorzugsweise separat von der Hydraulikeinrichtung betrieben, insbesondere beruht sie auf einem anderen Funktionsprinzip. Während also die Hydraulikeinrichtung hydraulisch arbeitet, kann die Sperreinrichtung elektrisch und/oder mechanisch arbeiten.

In einer weiteren Ausgestaltung ist vorgesehen, dass das Prüfen des Betriebszustands der Notentriegelungseinrichtung ausgesetzt wird, wenn der Betriebszustand der Hydraulikeinrichtung und/oder der Betriebszustand der Sperreinrichtung einen Defekt anzeigen. Trifft wenigstens eine dieser Bedingungen zu, so können die eingangs erläuterten Bedingungen, mit deren Hilfe der Betriebszustand der Notentriegelungseinrichtung geprüft wird, nicht mehr zuverlässig ausgewertet werden. Aus diesem Grund soll das Prüfen des Betriebszustands der Notentriegelungseinrichtung unterbunden werden, sobald einer der Betriebszustände oder beide Betriebszustände der Hydraulikeinrichtung und der Sperreinrichtung auf den Defekt hinweisen.

Schließlich kann in einer weiteren Ausgestaltung der Erfindung vorgesehen sein, dass als Sperreinrichtung eine elektromagnetische Sperreinrichtung verwendet wird. Bereits vorstehend wurde darauf hingewiesen, dass die Sperreinrichtung vorzugsweise auf einem anderen Funktionsprinzip basiert als die Hydraulikeinrichtung. Besonders bevorzugt ist sie als elektromagnetische Sperreinrichtung ausgebildet, sodass sie also den Hydraulikkolben innerhalb des Hydraulikzylinders unter Verwendung wenigstens eines Elektromagneten festsetzt.

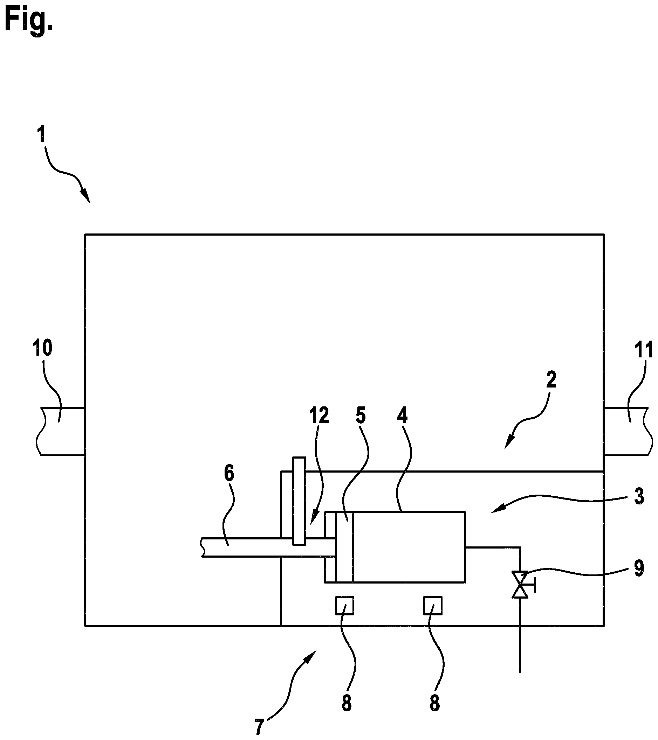

Die Erfindung betrifft weiterhin eine Automatikgetriebeeinrichtung, insbesondere zur Durchführung des vorstehend erläuterten Verfahrens, mit einer Parksperrvorrichtung, wobei die Parksperrvorrichtung eine Hydraulikeinrichtung mit einem Hydraulikzylinder und einem darin angeordneten, mittels einer Sperreinrichtung in zumindest zwei Positionen festsetzbaren Hydraulikkolben sowie eine Notentriegelungseinrichtung aufweist, wobei der Hydraulikkolben mit einer Schaltwelle der Parksperrvorrichtung wirkverbunden und ein Druck in dem Hydraulikzylinder mittels eines Hydraulikventils einstellbar ist, und wobei die Schaltwelle mittels der Hydraulikeinrichtung innerhalb eines Betriebspositionsbereichs verlagerbar ist, wobei innerhalb des Betriebspositionsbereichs eine erste Position vorliegt, in welcher die Schaltwelle derart angeordnet ist, dass die Parksperrvorrichtung deaktiviert ist, und eine zweite Position vorliegt, in welcher die Parksperrvorrichtung aktiviert ist. Die Automatikgetriebeeinrichtung ist dazu ausgebildet, bei einer Betätigung der Notentriegelungseinrichtung die Schaltwelle in eine Position zu verlagern, die außerhalb des Betriebspositionsbereichs liegt. Dabei ist die Automatikeinrichtung ferner ausgebildet einen Betriebszustand der Notentriegelungseinrichtung zu prüfen, wobei auf eine betätigte Notentriegelungseinrichtung erkannt wird, wenn über eine bestimmte Zeitspanne hinweg mittels eines Positionssensors eine Position der Schaltwelle ermittelt wird, die außerhalb des Betriebspositionsbereichs liegt.
Auf die Vorteile einer derartigen Vorgehensweise beziehungsweise einer derartigen Ausgestaltung der Automatikgetriebeeinrichtung wurde bereits hingewiesen. Sowohl die Automatikgetriebeeinrichtung als auch das Verfahren können gemäß den vorstehenden Ausführungen weitergebildet sein.
Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung einer Automatikgetriebeeinrichtung mit einer Parksperrvorrichtung.

Die Figur zeigt eine schematische Darstellung einer Automatikgetriebeeinrichtung 1, die beispielsweise einem Kraftfahrzeug zugeordnet ist. In diesem Zusammenhang kann die Automatikgetriebeeinrichtung 1 in einer Wirkverbindung zwischen einer Antriebseinrichtung des Kraftfahrzeugs und wenigstens einer angetriebenen Achse des Kraftfahrzeugs vorgesehen sein. Die Automatikgetriebeeinrichtung 1 verfügt über eine Parksperrvorrichtung 2, die eine Hydraulikeinrichtung 3 aufweist. Die Hydraulikeinrichtung weist einen Hydraulikzylinder 4 und einen in diesem angeordneten Hydraulikkolben 5 auf. Der Hydraulikkolben 5 ist mit einer Schaltwelle 6 der Parksperrvorrichtung 2 wirkverbunden. Mithilfe der Hydraulikeinrichtung 3 kann insoweit die Schaltwelle 6 verlagert werden, und zwar innerhalb eines Betriebspositionsbereichs. Weiterhin verfügt die Parksperrvorrichtung 2 über eine Sperreinrichtung 7, die beispielsweise mehrere Elektromagnetanordnungen 8 aufweist. Mittels der Elektromagnetanordnungen 8 sind die Schaltwelle 6 und/oder der Hydraulikkolben 5 in bestimmten Positionen innerhalb des Betriebspositionsbereichs festsetzbar. Der Hydraulikzylinder 4 ist mit einem Hydraulikventil 9 hydraulisch verbunden. Insbesondere ist der Hydraulikzylinder 4 über das Hydraulikventil 9 hydraulisch mit einer Hydraulikdruckquelle hydraulisch verbunden. Das bedeutet, dass mittels des Hydraulikventils 9 der Druck in dem Hydraulikzylinder 4 einstellbar und insoweit der Hydraulikkolben 5 innerhalb des Hydraulikzylinders 4 verlagerbar ist.
In der hier gezeigten schematischen Darstellung ist der Hydraulikzylinder 4 lediglich an das eine Hydraulikventil 9 angeschlossen. Selbstverständlich kann es vorgesehen sein, dass mehrere Hydraulikventile 9 oder eine Hydraulikventilanordnung mit dem Hydraulikkolben 4 hydraulisch verbunden ist, wobei dies bevorzugt auf einander entgegengesetzten Seiten des Hydraulikkolbens 5 vorgesehen ist, sodass der Hydraulikkolben 5 wahlweise von der einen oder der anderen Seite mit Hydraulikdruck beaufschlagbar und insoweit verlagerbar ist.

Über die Schaltwelle 6 wird die Parksperrvorrichtung mittels der Hydraulikeinrichtung 3 angesteuert. In einer ersten Stellung ist dabei die Parksperrvorrichtung 2 zum Freigeben der Automatikgetriebeeinrichtung 1 vorgesehen, während in einer zweiten Position die Parksperrvorrichtung 2 die Automatikgetriebeeinrichtung 1 versperrt, sodass insoweit eine Wirkverbindung zwischen einer Eingangswelle 10 und einer Ausgangswelle 11 unterbrochen ist. Insbesondere ist die Ausgangswelle 11 vollständig mittels der Parksperrvorrichtung 2 festsetzbar, sodass das Kraftfahrzeug gegen Wegrollen gesichert ist.

Es ist nun vorgesehen, dass die Schaltwelle 6 mittels einer Notentriegelungseinrichtung 12 (hier lediglich angedeutet) verlagerbar ist. Die Notentriegelungseinrichtung 12 dient dazu, die Parksperrvorrichtung 2 zu deaktivieren, also das Entsperren der Automatikgetriebeeinrichtung 1 zu bewirken, wenn dies auf Grund der Hydraulikeinrichtung 3 und/oder der Sperreinrichtung 7 nicht mehr möglich ist, beispielsweise weil ein Steuergerät die Hydraulikeinrichtung 3 und die Sperreinrichtung 7 zum permanenten Aktivieren der Parksperrvorrichtung 2 ansteuert. Mithilfe der Notentriegelungseinrichtung 12 kann die Schaltwelle 6 derart verlagert werden, dass sie außerhalb des Betriebspositionsbereichs liegt.

Es ist vorgesehen, dass ein Betriebszustand der Notentriegelungseinrichtung 12 geprüft wird. Dabei soll auf eine betätigte Notentriegelungseinrichtung 12 erkannt werden, wenn, insbesondere über eine bestimmte Zeitspanne hinweg, mittels eines hier nicht dargestellten Positionssensors eine Position der Schaltwelle 6 ermittelt wird, die außerhalb des Betriebspositionsbereichs liegt. Auch kann es vorgesehen sein, mittels des Positionssensors eine Strecke zu erfassen, um welche die Schaltwelle 6 verlagert wird, insbesondere über die Zeitspanne hinweg. Überschreitet die erfasste Strecke einen bestimmten Grenzwert, weicht insbesondere die mittels des Positionssensors erfasste Position der Schaltwelle 6 mindestens um den Grenzwert von derjenigen Position ab, in welcher die Parksperrvorrichtung aktiviert ist, so wird auf die betätigte Notentriegelungseinrichtung 12 erkannt, insbesondere wenn zusätzlich die Position außerhalb des Betriebspositionsbereichs liegt.

Zusätzlich kann geprüft werden, ob die Sperreinrichtung 7 über die bestimmte Zeitspanne hinweg den Hydraulikkolben 5 in einer der Positionen festgesetzt hat. Zusätzlich oder alternativ kann geprüft werden, ob eine Abweichung zwischen einem Sollstrom des Hydraulikventils 9 und einem Iststrom über die bestimmte Zeitspanne hinweg kleiner als ein bestimmter Grenzwert ist. Beispielsweise müssen mehrere, insbesondere alle, der genannten Bedingungen erfüllt sein, damit auf die betätigte Notentriegelungseinrichtung 12 erkannt wird.

Auf diese Art und Weise ist eine zuverlässige Erkennung möglich, ob die Automatikgetriebeeinrichtung 1 mittels der Notentriegelungseinrichtung 12 freigegeben wurde.

## Patentansprüche

1. Verfahren zum Betreiben einer Automatikgetriebeeinrichtung (1) mit einer Parksperrvorrichtung (2), wobei die Parksperrvorrichtung (2) eine Hydraulikeinrichtung (3) mit einem Hydraulikzylinder (4) und einem darin angeordneten, mittels einer Sperreinrichtung (7) in zumindest zwei Positionen festsetzbaren Hydraulikkolben (5) sowie eine Notentriegelungseinrichtung (12) aufweist, wobei der Hydraulikkolben (5) mit einer Schaltwelle (6) der Parksperrvorrichtung (2) wirkverbunden und ein Druck in dem Hydraulikzylinder (4) mittels eines Hydraulikventils (9) einstellbar ist, und wobei die Schaltwelle (6) mittels der Hydraulikeinrichtung (3) innerhalb eines Betriebspositionsbereichs verlagerbar ist, wobei innerhalb des Betriebspositionsbereichs eine erste Position vorliegt, in welcher die Schaltwelle (6) derart angeordnet ist, dass die Parksperrvorrichtung (2) deaktiviert ist, und eine zweite Position vorliegt, in welcher die Parksperrvorrichtung (2) aktiviert ist, **dadurch gekennzeichnet, dass** bei einer Betätigung der Notentriegelungseinrichtung (12) die Schaltwelle (6) in eine Position verlagert wird, die außerhalb des Betriebspositionsbereichs liegt, und dass ein Betriebszustand der Notentriegelungseinrichtung (12) geprüft wird, wobei auf eine betätigte Notentriegelungseinrichtung (12) erkannt wird, wenn über eine bestimmte Zeitspanne hinweg mittels eines Positionssensors eine Position der Schaltwelle (6) ermittelt wird, die außerhalb des Betriebspositionsbereichs liegt, und/oder wenn eine mittels des Positionssensors erfasste, von der Schaltwelle (6) zurückgelegte Strecke einen Grenzwert überschreitet.

2. Verfahren nach Anspruch 1, **dadurch gekennzeichnet, dass** das Prüfen des Betriebszustands eingeleitet wird, wenn
- an der Automatikgetriebeeinrichtung (1) eine Parkstellung eingestellt ist, und/oder
- mittels des Positionssensors eine Position der Schaltwelle (6) ermittelt wird, die innerhalb des Betriebspositionsbereichs liegt, und/oder
- die Sperreinrichtung (7) zum Festsetzen des Hydraulikkolbens (5) aktiviert ist, und/oder
- der Sollstrom des Hydraulikventils (9) dem Iststrom entspricht.

3. Verfahren nach einem der vorhergehenden Ansprüche, **dadurch gekennzeichnet, dass** das Prüfen des Betriebszustands eingeleitet wird, wenn an der Automatikgetriebeeinrichtung (1) eine von der Parkstellung verschiedene Fahrstellung eingestellt ist.

4. Verfahren nach einem der vorhergehenden Ansprüche, **dadurch gekennzeichnet, dass** das Prüfen des Betriebszustands eingeleitet wird, sobald die Brennkraftmaschine gestartet und/oder die Spannungsversorgung für die Zündung der Brennkraftmaschine hergestellt wird.

5. Verfahren nach einem der vorhergehenden Ansprüche, **dadurch gekennzeichnet, dass** ein Betriebszustand der Hydraulikeinrichtung (3), die den Hydraulikzylinder (4) und/oder das Hydraulikventil (9) aufweist, überwacht wird, und/oder dass ein Betriebszustand der Sperreinrichtung (7) überwacht wird.

6. Verfahren nach einem der vorhergehenden Ansprüche, **dadurch gekennzeichnet, dass** das Prüfen des Betriebszustands der Notentriegelungseinrichtung (12) ausgesetzt wird, wenn der Betriebszustand der Hydraulikeinrichtung (3) und/oder der Betriebszustand der Sperreinrichtung (7) einen Defekt anzeigen.

7. Verfahren nach einem der vorhergehenden Ansprüche, **dadurch gekennzeichnet, dass** als Sperreinrichtung (7) eine elektromagnetische Sperreinrichtung verwendet wird.

8. Automatikgetriebeeinrichtung (1), insbesondere zur Durchführung des Verfahrens nach einem oder mehreren der vorhergehenden Ansprüche, mit einer Parksperrvorrichtung (2), wobei die Parksperrvorrichtung (2) eine Hydraulikeinrichtung (3) mit einem Hydraulikzylinder (4) und einem darin angeordneten, mittels einer Sperreinrichtung (7) in zumindest zwei Positionen festsetzbaren Hydraulikkolben (5) sowie eine Notentriegelungseinrichtung (12) aufweist, wobei der Hydraulikkolben (5) mit einer Schaltwelle (6) der Parksperrvorrichtung (2) wirkverbunden und ein Druck in dem Hydraulikzylinder (4) mittels eines Hydraulikventils (9) einstellbar ist, und wobei die Schaltwelle (6) mittels der Hydraulikeinrichtung (3) innerhalb eines Betriebspositionsbereichs verlagerbar ist, wobei innerhalb des Betriebspositionsbereichs eine erste Position vorliegt, in welcher die Schaltwelle (6) derart angeordnet ist, dass die Parksperrvorrichtung (2) deaktiviert ist, und eine zweite Position vorliegt, in welcher die Parksperrvorrichtung (2) aktiviert ist, **dadurch gekennzeichnet, dass** die Automatikgetriebeeinrichtung (1) dazu ausgebildet ist, bei einer Betätigung der Notentriegelungseinrichtung (12) die Schaltwelle (6) in eine Position zu verlagern, die außerhalb des Betriebspositionsbereichs liegt, und dass ferner die Automatikeinrichtung (1) ausgebildet ist einen Betriebszustand der Notentriegelungseinrichtung (12) zu prüfen, wobei auf eine betätigte Notentriegelungseinrichtung (12) erkannt wird, wenn über eine bestimmte Zeitspanne hinweg mittels eines Positionssensors eine Position der Schaltwelle (6) ermittelt wird, die außerhalb des Betriebspositionsbereichs liegt, und/oder wenn eine mittels des Positionssensors erfasste, von der Schaltwelle (6) zurückgelegte Strecke einen Grenzwert überschreitet.

## Claims

1. Method for operating an automatic transmission apparatus (1) having a parking lock device (2), wherein the parking lock device (2) has a hydraulic apparatus (3) with a hydraulic cylinder (4) and a hydraulic piston (5) which is arranged therein and can be secured in at least two positions by means of a locking apparatus (7), and an emergency unlocking apparatus (12), wherein the hydraulic piston (5) is operatively connected to a switching shaft (6) of the parking lock device (2), and a pressure can be set in the hydraulic cylinder (4) by means of a hydraulic valve (9), and wherein the switching shaft (6) can be moved within an operating position range by means of the hydraulic apparatus (3), wherein, within the operating position range, there is a first position in which the switching shaft (6) is arranged in such a way that the parking lock device (2) is deactivated, and there is a second position in which the parking lock device (2) is activated,
**characterised in that,** when the emergency unlocking apparatus (12) is actuated, the switching shaft (6) is moved into a position which lies outside the operating position range, and **in that** an operating state of the emergency unlocking apparatus (12) is checked, wherein an actuated emergency unlocking apparatus (12) is detected if, over a specific time period, a position sensor determines a position of the switching shaft (6) which lies outside the operating position range and/or if a distance travelled by the switching shaft (6) and detected by means of the position sensor exceeds a limit value.

2. Method according to claim 1, **characterised in that** the checking of the operating state is initiated when:
- a parking setting is set on the automatic transmission apparatus (1), and/or
- the position sensor determines a position of the switching shaft (6) which lies outside the operating position range, and/or
- the locking apparatus (7) is activated to secure the hydraulic piston (5), and/or
- the target current of the hydraulic valve (9) corresponds to the actual current.

3. Method according to any of the preceding claims, **characterised in that** the checking of the operating state is initiated when a drive setting that is different from the parking setting is set on the automatic transmission apparatus (1).

4. Method according to any of the preceding claims, **characterised in that** the checking of the operating state is initiated as soon as an internal combustion engine is started and/or the voltage supply for igniting the internal combustion engine is established.

5. Method according to any of the preceding claims, **characterised in that** an operating state of the hydraulic apparatus (3), which has the hydraulic cylinder (4) and/or the hydraulic valve (9), is monitored, and/or **in that** an operating state of the locking apparatus (7) is monitored.

6. Method according to any of the preceding claims, **characterised in that** the checking of the operating state of the emergency unlocking apparatus (12) is suspended when the operating state of the hydraulic apparatus (3) and/or the operating state of the locking apparatus (7) indicate a defect.

7. Method according to any of the preceding claims, **characterised in that** an electromagnetic locking apparatus is used as the locking apparatus (7).

8. Automatic transmission apparatus (1), in particular for carrying out the method according to one or more of the preceding claims, having a parking lock device (2), wherein the parking lock device (2) has a hydraulic apparatus (3) with a hydraulic cylinder (4) and a hydraulic piston (5) which is arranged therein and can be secured in at least two positions by means of a locking apparatus (7), and an emergency unlocking apparatus (12), wherein the hydraulic piston (5) is operatively connected to a switching shaft (6) of the parking lock device (2), and a pressure can be set in the hydraulic cylinder (4) by means of a hydraulic valve (9), and wherein the switching shaft (6) can be moved within an operating position range by means of the hydraulic apparatus (3), wherein, within the operating position range, there is a first position in which the switching shaft (6) is arranged in such a way that the parking lock device (2) is deactivated, and there is a second position in which the parking lock device (2) is activated,
**characterised in that** the automatic transmission apparatus (1) is designed, when the emergency unlocking apparatus (12) is actuated, to move the switching shaft (6) into a position which lies outside the operating position range, and **in that**, furthermore, the automatic apparatus (1) is designed to check an operating state of the emergency unlocking apparatus (12), wherein an actuated emergency unlocking apparatus (12) is detected if, over a specific time period, a position sensor determines a position of the switching shaft (6) which lies outside the operating position range and/or if a distance travelled by the switching shaft (6) and detected by means of the position sensor exceeds a limit value.

## Revendications

1. Procédé de fonctionnement d'un dispositif de transmission automatique (1) avec un dispositif de frein de stationnement (2),
dans lequel le dispositif de frein de stationnement (2) présente un dispositif hydraulique (3), avec un cylindre hydraulique (4) et avec un piston hydraulique (5) agencé à l'intérieur et pouvant être immobilisé au moyen d'un dispositif de blocage (7) dans au moins deux positions, ainsi qu'un dispositif de déblocage d'urgence (12),
dans lequel le piston hydraulique (5) est en liaison active avec un arbre de commutation (6) du dispositif de frein de stationnement (2) et une pression dans le cylindre hydraulique (4) est réglable au moyen d'une vanne hydraulique (9),
dans lequel l'arbre de commutation (6) peut être déplacé au moyen du dispositif hydraulique (3) à l'intérieur d'une plage de position de fonctionnement
et dans lequel, à l'intérieur de la plage de position de fonctionnement, il existe une première position dans laquelle l'arbre de commutation (6) est agencé de telle sorte que le dispositif de frein de stationnement (2) est désactivé et il existe une deuxième position dans laquelle le dispositif de frein de stationnement (2) est activé,
**caractérisé en ce que,** lors d'un actionnement du dispositif de déblocage d'urgence (12), l'arbre de commutation (6) est déplacé dans une position qui se situe à l'extérieur de la plage de position de fonctionnement et **en ce qu'**un état de fonctionnement du dispositif de déblocage d'urgence (12) est vérifié,
dans lequel le dispositif de déblocage d'urgence (12) est reconnu comme étant actionné si, au-delà d'un certain laps de temps, est déterminée au moyen d'un capteur de position une position de l'arbre de commutation (6) qui se situe à l'extérieur de la plage de position de fonctionnement et/ou si une distance parcourue par l'arbre de commutation (6) et détectée au moyen du capteur de position dépasse une valeur limite.

2. Procédé selon la revendication 1, **caractérisé en ce que** la vérification de l'état de fonctionnement est déclenchée si
- une position de stationnement est réglée au niveau du dispositif de transmission automatique (1), et/ou
- au moyen du capteur de position est détectée une position de l'arbre de commutation (6) qui se situe à l'intérieur de la plage de position de fonctionnement, et/ou
- le dispositif de blocage (7) destiné à l'immobilisation du piston hydraulique (5) est activé, et/ou
- le flux de consigne de la vanne hydraulique (9) correspond au flux réel.

3. Procédé selon l'une quelconque des revendications précédentes, **caractérisé en ce que** la vérification de l'état de fonctionnement est déclenchée lorsqu'une position de conduite différente de la position de stationnement est réglée au niveau du dispositif de transmission automatique (1).

4. Procédé selon l'une quelconque des revendications précédentes, **caractérisé en ce que** la vérification de l'état de fonctionnement est déclenchée dès que le moteur à combustion interne est démarré et/ou dès que l'alimentation en tension destinée à l'allumage du moteur à combustion interne est établie.

5. Procédé selon l'une quelconque des revendications précédentes, **caractérisé en ce qu'un** état de fonctionnement du dispositif hydraulique (3), qui présente le cylindre hydraulique (4) et/ou la vanne hydraulique (9), est surveillé et/ou **en ce qu'**un état de fonctionnement du dispositif de blocage (7) est surveillé.

6. Procédé selon l'une quelconque des revendications précédentes, **caractérisé en ce que** la vérification de l'état de fonctionnement du dispositif de déblocage d'urgence (12) est suspendue lorsque l'état de fonctionnement du dispositif hydraulique (3) et/ou l'état de fonctionnement du dispositif de blocage (7) présentent un défaut.

7. Procédé selon l'une quelconque des revendications précédentes, **caractérisé en ce qu'on** utilise comme dispositif de blocage (7) un dispositif de blocage électromagnétique.

8. Dispositif de transmission automatique (1), en particulier pour la mise en œuvre du procédé selon une ou plusieurs des revendications précédentes, avec un dispositif de frein de stationnement (2),
dans lequel le dispositif de frein de stationnement (2) présente un dispositif hydraulique (3), avec un cylindre hydraulique (4) et avec un piston hydraulique (5) agencé à l'intérieur et pouvant être immobilisé au moyen d'un dispositif de blocage (7) dans au moins deux positions, ainsi qu'un dispositif de déblocage d'urgence (12),
dans lequel le piston hydraulique (5) est en liaison active avec un arbre de commutation (6) du dispositif de frein de stationnement (2) et une pression dans le cylindre hydraulique (4) est réglable au moyen d'une vanne hydraulique (9),
dans lequel l'arbre de commutation (6) peut être déplacé au moyen du dispositif hydraulique (3) à l'intérieur d'une plage de position de fonctionnement
et dans lequel, à l'intérieur de la plage de position de fonctionnement, il existe une première position dans laquelle l'arbre de commutation (6) est agencé de telle sorte que le dispositif de frein de stationnement (2) est désactivé et il existe une deuxième position dans laquelle le dispositif de frein de stationnement (2) est activé,
**caractérisé en ce que** le dispositif de transmission automatique (1) est conçu pour, lors d'un actionnement du dispositif de déblocage d'urgence (12), déplacer l'arbre de commutation (6) dans une position qui se situe à l'extérieur de la plage de position de fonctionnement et **en ce que** le dispositif de transmission automatique (1) est conçu en outre pour vérifier un état de fonctionnement du dispositif de déblocage d'urgence (12),
dans lequel le dispositif de déblocage d'urgence (12) est reconnu comme étant actionné si, au-delà d'un certain laps de temps, est déterminée au moyen d'un capteur de position une position de l'arbre de commutation (6) qui se situe à l'extérieur de la plage de position de fonctionnement et/ou si une distance parcourue par l'arbre de commutation (6) et détectée au moyen du capteur de position dépasse une valeur limite.
